(19) **Europäisches Patentamt / European Patent Office / Office européen des brevets**

(11) **EP 3 158 182 B1**

(12) # FASCICULE DE BREVET EUROPEEN

(45) Date de publication et mention de la délivrance du brevet:
**22.11.2017 Bulletin 2017/47**

(21) Numéro de dépôt: **15756180.4**

(22) Date de dépôt: **22.06.2015**

(51) Int Cl.:
**F02K 1/12** *(2006.01)*   **F02K 1/15** *(2006.01)*

(86) Numéro de dépôt international:
**PCT/FR2015/051643**

(87) Numéro de publication internationale:
**WO 2015/197958 (30.12.2015 Gazette 2015/52)**

(54) **PROCÉDÉ DE COMMANDE D'UNE TUYÈRE À GÉOMÉTRIE VARIABLE POUR NACELLE DE TURBORÉACTEUR**

VERFAHREN ZUR STEUERUNG EINER DÜSE MIT VERÄNDERLICHER GEOMETRIE FÜR EINE TURBOSTRAHLGONDEL

METHOD FOR CONTROLLING A VARIABLE GEOMETRY NOZZLE FOR A TURBOJET NACELLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2014 FR 1455769**

(43) Date de publication de la demande:
**26.04.2017 Bulletin 2017/17**

(73) Titulaire: **Safran Nacelles**
**76700 Gonfreville-l'Orcher (FR)**

(72) Inventeurs:
• **MAALIOUNE, Hakim**
**F-78630 Orgeval (FR)**

• **HUE, Corentin**
**F-76600 Le Havre (FR)**
• **GONIDEC, Patrick**
**F-31530 Bretx (FR)**
• **KERBLER, Olivier**
**F-92160 Antony (FR)**

(74) Mandataire: **Gaillarde, Frédéric F. Ch. et al**
**Cabinet Germain & Maureau**
**31-33, rue de la Baume**
**75008 Paris (FR)**

(56) Documents cités:
**EP-A1- 1 040 265     EP-A1- 2 653 701**
**FR-A1- 2 994 220     US-A- 6 142 416**

**Description**

L'invention concerne un procédé de commande d'une tuyère à géométrie variable destinée à équiper une nacelle pour turboréacteur.

L'invention concerne également une nacelle pour la mise en oeuvre d'un tel procédé.

Un aéronef est mû par plusieurs turboréacteurs logés chacun dans une nacelle.

Une nacelle présente généralement une structure tubulaire comprenant une entrée d'air en amont du turboréacteur, une section médiane destinée à entourer une soufflante du turboréacteur, une section aval abritant un dispositif d'inversion de poussée et destinée à entourer la chambre de combustion du turboréacteur, et est généralement terminée par une tuyère d'éjection dont la sortie est située en aval du turboréacteur.

Cette nacelle est destinée à abriter un turboréacteur double flux apte à générer par l'intermédiaire des aubes de la soufflante en rotation un flux d'air chaud (également appelé flux primaire), issu de la chambre de combustion du turboréacteur, et un flux d'air froid (flux secondaire) qui circule à l'extérieur du turboréacteur à travers un canal annulaire, également appelé veine, formé entre un carénage du turboréacteur et une paroi interne de la nacelle. Les deux flux d'air sont éjectés du turboréacteur par l'arrière de la nacelle.

Le dispositif d'inversion de poussée est, lors de l'atterrissage de l'aéronef, destiné à améliorer la capacité de freinage de celui-ci en redirigeant vers l'avant au moins une partie de la poussée générée par le turboréacteur.

Par ailleurs, outre sa fonction d'inversion de poussée, le capot d'inverseur appartient à la section aval de la nacelle et présente une partie aval formant la tuyère d'éjection visant à canaliser l'éjection des flux d'air.

La section optimale de la tuyère d'éjection peut être adaptée en fonction des différentes phases de vol, à savoir les phases de décollage, de montée, de croisière, de descente et d'atterrissage de l'avion. Les avantages déjà bien connus de telles tuyères adaptatives, également appelées tuyères à géométrie variable, sont notamment la réduction de bruit, la diminution de consommation de carburant ou encore l'opérabilité moteur.

La tuyère à géométrie variable comporte généralement une section aval terminée par une pluralité de volets qui sont montés mobiles de façon à faire varier la section d'éjection de la tuyère.

Les volets sont entraînés en déplacement par des moyens d'actionnement qui sont commandés par un moyen de commande permettant d'entraîner les volets de la tuyère dans une position demandée.

Ce type de tuyère est par exemple décrit dans le document FR 2 622 929. EP1040265B1 décrit également une tuyère selon l'art antérieur. Le taux de disponibilité demandé à une tuyère à géométrie variable est élevé et difficile à obtenir.

Certains cas de pannes simples, comme un simple blocage d'un volet, peuvent conduire à une indisponibilité de la tuyère.

En effet, selon l'art antérieur, chaque volet de la tuyère est actionné par un actionneur électromécanique motorisé.

De manière connue, ces actionneurs peuvent être reliés entre eux par des arbres flexibles, pour synchroniser les actionneurs en position les uns par rapport aux autres.

Cette solution permet également de limiter le nombre de capteurs de positions pour contrôler la position des volets.

Cependant, dans le cas de blocage d'un actionneur ou d'un volet, tout le système risque d'être bloqué.

La présente invention vise notamment à résoudre cet inconvénient et se rapporte pour ce faire à un procédé de commande d'une tuyère à géométrie variable destiné à équiper une nacelle pour turboréacteur, nacelle du type comportant :

- une tuyère à géométrie variable comportant une section aval terminée par une pluralité de volets qui sont montés mobiles de façon à faire varier la section d'éjection de la tuyère,
- des moyens d'actionnement des volets de la tuyère,
- un moyen de commande des volets de la tuyère dans une position demandée,
- des moyens de détection de l'état des volets de la tuyère permettant de déterminer au moins un état bloqué ou un état fonctionnel pour chaque volet,

le procédé étant remarquable en ce qu'il est prévu pour commander la tuyère dans un mode normal lorsque les volets sont détectés dans un état fonctionnel, ou dans un mode dégradé lorsqu'au moins un volet est détecté dans un état bloqué par lesdits moyens de détection, mode dégradé dans lequel le procédé consiste à commander l'ouverture d'un ou plusieurs volets en état fonctionnel au-delà de leur ouverture nominale, pour permettre de compenser ledit au moins un volet bloqué afin d'assurer une ouverture de la tuyère correspondant à la commande d'ouverture initiale.

Le procédé selon l'invention permet un fonctionnement optimal de la tuyère même en cas de défaillance d'un ou éventuellement plusieurs volets, suivant leurs positions et la section de tuyère à atteindre.

Plus particulièrement, en mode dégradé, le procédé consiste à commander l'ouverture des volets en état fonctionnel, en fonction du nombre de volets en état bloqué et de leur position de blocage.

Cette caractéristique permet de compenser un certain nombre de blocages dans la limite des capacités d'adaptation du système, c'est-à-dire que cette logique de fonctionnement permet de compenser de manière optimale le blocage des volets dès lors que la section de tuyère cible est atteinte.

Selon un exemple de mise en oeuvre préféré, en mode dégradé, le procédé consiste à commander l'ouverture des volets en état fonctionnel chacun au-delà de leur ouverture nominale, chaque volet en état fonctionnel permettant un rapport d'ouverture R par rapport à leur ouverture en mode normal, le rapport d'ouverture R correspondant à la fonction suivante :

$$R = (n+1)/n$$

avec n mis pour le nombre total de volets de la tuyère.

De plus, les moyens d'actionnement des volets de la tuyère comportent une pluralité d'actionneurs, chaque actionneur étant associé à un volet pour permettre de commander indépendamment chaque volet en déplacement.

Aussi, les moyens de détection comportent des capteurs de position conçus pour mesurer le déplacement angulaire de chaque volet.

Selon une variante de réalisation, les moyens de détection comportent des capteurs de position conçus pour mesurer le déplacement des moyens d'actionnement de chaque volet.

L'invention concerne aussi une nacelle de turboréacteur pour la mise en oeuvre du procédé conforme à ce qui précède, la nacelle comportant :

- une tuyère à géométrie variable comportant une section aval terminée par une pluralité de volets qui sont montés mobiles, de façon à faire varier la section d'éjection de la tuyère,
- des moyens d'actionnement des volets de la tuyère qui comportent une pluralité d'actionneurs, chaque actionneur étant associé à un volet pour permettre de commander indépendamment chaque volet en déplacement,
- un moyen de commande, et
- des moyens de détection de l'état des volets de la tuyère permettant de déterminer au moins un état bloqué ou un état fonctionnel pour chaque volet.

D'autres caractéristiques et avantages de l'invention apparaîtront à la lecture de la description détaillée qui suit pour la compréhension de laquelle on se reportera aux dessins annexés dans lesquels :

- la figure 1 est une vue schématique illustrant la tuyère dans un mode normal dans lequel les volets occupent chacun une position fermée et sont dans un état fonctionnel ;
- la figure 2 est une vue schématique illustrant la tuyère dans un mode normal dans lequel les volets occupent chacun une position ouverte et sont dans un état fonctionnel ;
- la figure 3 est une vue schématique illustrant la tuyère dans un mode dégradé dans lequel un volet occupe une position fermée et est dans un état bloqué, et les autres volets occupent chacun une position de sur-ouverture et sont dans un état fonctionnel ;
- la figure 4 est un organigramme illustrant les étapes de fonctionnement du procédé selon l'invention.

A noter que dans la présente demande de brevet, les termes « amont » et «aval » doivent s'entendre par rapport à la circulation du flux d'air à l'intérieur de l'ensemble propulsif formé par la nacelle et le turboréacteur.

Pour les différentes variantes de réalisation, les mêmes références pourront être utilisées pour des éléments identiques ou assurant la même fonction, par souci de simplification de la description.

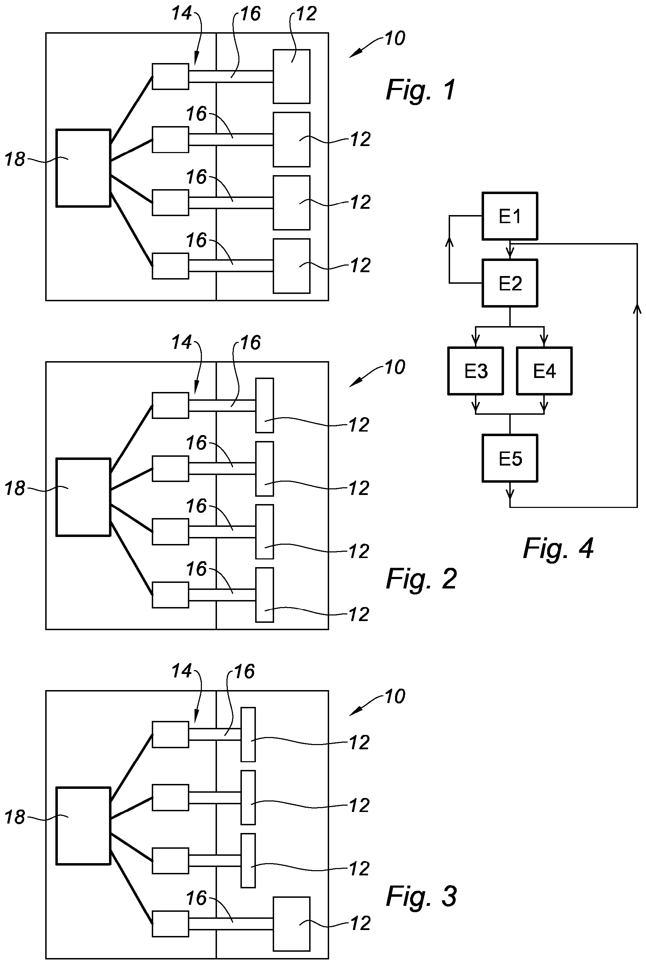

On a représenté schématiquement à la figure 1 une tuyère 10 à géométrie variable, ou section variable, destinée à équiper une nacelle pour turboréacteur.

La nacelle (non représentée) est destinée à être suspendue à un mât réacteur par l'intermédiaire d'un îlot de fixation formant interface de liaison.

La nacelle comprend un capotage externe comprenant une section amont et une section aval comprenant la tuyère 10 d'éjection d'une partie du flux d'air secondaire circulant dans un canal annulaire défini entre la structure interne fixe de la nacelle et la paroi interne du capotage externe.

La tuyère 10 à géométrie variable comporte une section aval terminée par une pluralité de volets 12 qui sont montés mobiles de façon à faire varier la section d'éjection de la tuyère 10.

Par souci de clarté des figures et de la description, les volets 12 sont ici au nombre de quatre. Toutefois, la tuyère 10 peut comporter plus de quatre volets 12.

Les volets 12 sont entraînés en déplacement par des moyens d'actionnement 14, chacun entre une position fermée représentée à la figure 1, correspondant à une section réduite de la tuyère 10, et une position ouverte représentée à la figure 2, correspondant à une section augmentée de la tuyère 10.

Les moyens d'actionnement 14 des volets 12 de la tuyère 10 comportent une pluralité d'actionneurs 16, chaque actionneur 16 étant associé à un volet 12 pour permettre de commander indépendamment chaque volet 12 en déplacement.

Chaque actionneur 16 est par exemple un actionneur électromécanique motorisé.

De plus, les actionneurs 16 sont associés à un système d'actionnement (non représenté), et à un moyen de commande 18 des volets 12 de la tuyère 10 conçu pour commander les volets 12 dans une position demandée.

Le système d'actionnement est par exemple du type TRAS de l'anglais « Thrust Reverser Actuation System ».

Le moyen de commande 18 est ici constitué par un système de régulation numérique du type « TRCU », acronyme de «Thrust Reverser Control Unit » en terminologie anglo-saxonne, en communication permanente avec le « FADEC », acronyme de « Full Authority Digital Engine Control » en terminologie anglo-saxonne.

De façon complémentaire, la nacelle comporte des moyens de détection (non représentés) de l'état des volets 12 de la tuyère 10 permettant de déterminer au moins un état bloqué ou un état fonctionnel pour chaque volet 12.

On entend par état bloqué un état dans lequel le volet est immobile et ne répond plus à la commande d'ouverture ou de fermeture.

A l'inverse, on entend par état fonctionnel un état dans lequel le volet est mobile et répond à la commande d'ouverture ou de fermeture.

Les moyens de détection comportent des capteurs de position conçus pour mesurer le déplacement angulaire de chaque volet 12. Ces capteurs de position sont par exemple du type RVDT de l'anglais « Rotary Variable Differential Transformer ».

Selon une variante de réalisation, les moyens de détection comportent des capteurs de position conçus pour mesurer le déplacement de chaque actionneur 16 associé à un volet 12. Ces capteurs de position sont par exemple du type LVDT de l'anglais « Linear variable Differential Transformer ».

Les moyens de détection permettent d'une part de connaître la position de chaque volet 12 et, d'autre part, de détecter si un volet 12 occupe un état bloqué ou un état fonctionnel.

Le procédé de commande selon l'invention est prévu pour commander la tuyère 10 dans un mode normal lorsque les volets 12 sont détectés dans un état fonctionnel, ou dans un mode dégradé lorsqu'au moins un volet 12 est détecté dans un état bloqué par les moyens de détection associés.

En mode normal, représenté aux figures 1 et 2, le procédé consiste à commander l'ouverture des volets 12 chacun jusqu'à leur ouverture nominale, afin d'assurer une ouverture de la tuyère 10 correspondant à la commande d'ouverture initiale.

On entend par ouverture nominale une ouverture correspondant à la commande d'ouverture initiale en mode normal.

Comme on peut le voir à la figure 1, les volets 12 occupent leur position nominale ouverte, et à la figure 2, les volets 12 occupent leur position nominale fermée.

En mode dégradé, représenté à la figure 3, le procédé consiste à commander l'ouverture d'un ou plusieurs volets 12 fonctionnels au-delà de leur ouverture nominale, pour permettre de compenser l'au moins un volet 12 bloqué, afin d'assurer une ouverture de la tuyère 10 correspondant à la commande d'ouverture initiale.

Selon l'exemple de réalisation représenté à la figure 3, un volet 12 est en état bloqué et les autres volets 12 fonctionnels compensent ce blocage en adoptant une position de sur-ouverture.

Plus particulièrement, en mode dégradé, le procédé consiste à commander l'ouverture des volets 12 fonctionnels, en fonction du nombre de volets 12 en état bloqué et de leur position de blocage.

A cet effet, chaque volet 12 est conçu pour s'ouvrir au-delà de sa position ouverte, dans une position dite de sur-ouverture, pour compenser le ou les volets 12 bloqués.

De façon générale, en mode dégradé, le procédé consiste à commander l'ouverture des volets 12 fonctionnels chacun au-delà de leur ouverture nominale, chaque volet 12 en état fonctionnel offrant un rapport d'ouverture R par rapport à leur ouverture en mode normal, le rapport d'ouverture R correspondant à la fonction suivante :

$$R = (n+1)/n$$

Avec n mis pour le nombre total de volets 12 de la tuyère 10.

Selon l'exemple décrit ici, la tuyère 10 comporte quatre volets 12, de sorte que, en mode dégradé dans lequel un volet 12 est bloqué en position fermée, les volets fonctionnels peuvent être chacun entraînés dans une position de sur-ouverture correspondant à quatre tiers de leur position d'ouverture nominale.

Un exemple de mise en oeuvre du procédé selon l'invention est décrit ci-dessous.

En référence à la figure 4, une étape E1 de commande consiste à transmettre une consigne d'ouverture au système d'actionnement par l'intermédiaire du moyen de commande 18.

L'étape E1 de commande est suivie d'une étape E2 de détermination selon laquelle le système d'actionnement détermine le mode de fonctionnement de la tuyère 10, à savoir le mode dégradé ou le mode normal.

En mode normal, illustré par l'étape E3, tous les volets 12 sont entraînés jusqu'à leur position d'ouverture nominale.

En mode dégradé illustré par l'étape E4, dans le cas où la consigne donnée est d'ouvrir la tuyère 10, les volets 12 fonctionnels sont entraînés dans une position de sur-ouverture, jusqu'à ce que la consigne d'ouverture désirée soit atteinte. Dans le cas où la consigne donnée est de fermer la tuyère 10, les volets 12 fonctionnels sont entraînés dans leur position de fermeture afin de s'approcher de la consigne donnée. Quelle que soit la consigne donnée, ouverture ou fermeture de la tuyère, le mode de fonctionnement dégradé autorise avantageusement une action sur les volets fonctionnels, à la différence de l'art antérieur qui prévoit une coupure de l'alimentation de l'ensemble des actionneurs, qu'ils soient associés à des volets fonctionnels ou à des volets en situation de blocage. Le mode de fonctionnement dégradé permet en quelque sorte une coupure de l'alimentation des actionneurs associés aux volets de la tuyère concernés par une situation de blocage tout en autorisant de continuer à alimenter les actionneurs fonctionnels.

Alternativement, lorsqu'une porte est bloquée dans un état donné, une information est envoyée au FADEC par le TRCU ou par le NCU (« Nacelle Control Unit » en terminologie anglo-saxonne), qui commande une adaptation du régime moteur.

L'étape E5 est une étape de surveillance qui consiste à détecter la position des volets 12 ou des actionneurs 16 pour détecter un éventuel blocage des volets 12, par les moyens de détection prévus à cet effet, et à transmettre l'information au système d'actionnement.

L'invention concerne également une nacelle de turboréacteur du type décrite précédemment, pour la mise en oeuvre du procédé selon l'invention.

La présente description de l'invention est donnée à titre d'exemple non limitatif.

L'exemple décrit précédemment illustre le fonctionnement du procédé permettant de compenser l'ouverture du ou des volets bloqués afin d'assurer une ouverture de la tuyère correspondant à la commande d'ouverture initiale.

On comprendra notamment que le procédé permet également de compenser l'ouverture du ou des volets bloqués afin d'assurer une fermeture de la tuyère correspondant à la commande de fermeture initiale.

**Revendications**

1. Procédé de commande d'une tuyère à géométrie variable destinée à équiper une nacelle pour turboréacteur, nacelle du type comportant :

    - une tuyère (10) à géométrie variable comportant une section aval terminée par une pluralité de volets (12) qui sont montés mobiles de façon à faire varier la section d'éjection de la tuyère (10),
    - des moyens d'actionnement (14) des volets (12) de la tuyère (10),
    - un moyen de commande (18) des volets (12) de la tuyère (10) dans une position demandée, et
    - des moyens de détection de l'état des volets (12) de la tuyère (10) permettant de déterminer au moins un état bloqué ou un état fonctionnel pour chaque volet (12),

    **caractérisé en ce que** le procédé est prévu pour commander la tuyère (10) dans un mode normal lorsque les volets (12) sont détectés dans un état fonctionnel, ou dans un mode dégradé lorsqu'au moins un volet (12) est détecté dans un état bloqué par lesdits moyens de détection, mode dégradé dans lequel le procédé consiste à commander l'ouverture d'un ou plusieurs volets (12) en état fonctionnel au-delà de leur ouverture nominale, pour permettre de compenser ledit au moins un volet (12) bloqué afin d'assurer une ouverture de la tuyère (10) correspondant à la commande d'ouverture initiale.

2. Procédé de commande selon la revendication 1, **caractérisé en ce que**, en mode dégradé, le procédé consiste à commander l'ouverture des volets (12) en état fonctionnel, en fonction du nombre de volets (12) en état bloqué et de leur position de blocage.

3. Procédé de commande selon l'une quelconque des revendications précédentes, **caractérisé en ce que**, en mode dégradé, le procédé consiste à commander l'ouverture des volets (12) en état fonctionnel chacun au-delà de leur ouverture nominale, chaque volet (12) en état fonctionnel permettant un rapport d'ouverture R par rapport à leur ouverture en mode normal, le rapport d'ouverture R correspondant à la fonction suivante :

$$R = (n+1)/n$$

avec n mis pour le nombre total de volets (12) de la tuyère (10).

4. Procédé de commande selon l'une quelconque des revendications précédentes, **caractérisé en ce que** les moyens d'actionnement (14) des volets (12) de la tuyère (10) comportent une pluralité d'actionneurs (16), chaque actionneur (16) étant associé à un volet (12) pour permettre de commander indépendamment chaque volet (12) en déplacement.

5. Procédé de commande selon l'une quelconque des revendications précédentes, **caractérisé en ce que** les moyens de détection comportent des capteurs de position conçus pour mesurer le déplacement angulaire de chaque volet (12).

6. Procédé de commande selon l'une quelconque des revendications précédentes, **caractérisé en ce que** les moyens de détection comportent des capteurs de position conçus pour mesurer le déplacement des moyens d'actionnement (14) de chaque volet (12).

7. Nacelle de turboréacteur pour la mise en oeuvre du procédé selon l'une quelconque des revendications précédentes, la nacelle comportant :

    - une tuyère (10) à géométrie variable comportant une section aval terminée par une pluralité de volets (12) qui sont montés mobiles, de façon à faire varier la section d'éjection de la tuyère (10),
    - des moyens d'actionnement (14) des volets de la tuyère (10) qui comportent une pluralité d'actionneurs (16), chaque actionneur (16) étant associé à un volet (12) pour permettre de commander indépendamment chaque volet (12) en déplacement,

- un moyen de commande (18), et
- des moyens de détection de l'état des volets (12) de la tuyère (10) permettant de déterminer au moins un état bloqué ou un état fonctionnel pour chaque volet (12).

**Patentansprüche**

1. Verfahren zum Steuern einer Düse mit variabler Geometrie, die dazu bestimmt ist, eine Gondel für ein Turbostrahltriebwerk auszurüsten, eine Gondel in der Art umfassend:

   - eine Düse (10) mit variabler Geometrie, einen stromabwärts befindlichen Querschnitt umfassend, der durch eine Vielzahl von Klappen (12) abgeschlossen wird, die beweglich montiert sind, um den Ausstoßquerschnitt der Düse (10) zu variieren,
   - Mittel zum Betätigen (14) der Klappen (12) der Düse (10),
   - Mittel zum Steuern (18) der Klappen (12) der Düse (10) in eine angeforderte Position, und
   - Mittel zum Erfassen des Zustands der Klappen (12) der Düse (10), die es ermöglichen, zumindest einen blockierten Zustand oder einen funktionsfähigen Zustand für jede Klappe (12) zu bestimmen,

   **dadurch gekennzeichnet, dass** das Verfahren vorgesehen ist, um die Düse (10) in einem normalen Modus zu steuern, wenn die Klappen (12) in einem funktionsfähigen Zustand erfasst werden, oder in einem herabgestuften Modus, wenn zumindest eine Klappe (12) durch die besagten Mittel zum Erfassen in einem blockierten Zustand erfasst wird, einem herabgestuften Modus, bei dem das Verfahren darin besteht, das Öffnen einer oder mehrerer Klappen (12) im funktionsfähigen Zustand über deren nominale Öffnung hinaus anzusteuern, um es zu ermöglichen, die besagte zumindest eine blockierte Klappe (12) zu kompensieren, um eine Öffnung der Düse (10) zu gewährleisten, die der ursprünglichen Öffnungsansteuerung entspricht.

2. Verfahren zum Steuern nach Anspruch 1, **dadurch gekennzeichnet, dass** das Verfahren im herabgestuften Modus darin besteht, das Öffnen der Kappen (12) im funktionsfähigen Zustand in Abhängigkeit von der Anzahl der Klappen (12) im blockierten Zustand und ihrer Blockierungsposition anzusteuern.

3. Verfahren zum Steuern nach einem der vorstehenden Ansprüche, **dadurch gekennzeichnet, dass** das Verfahren im herabgestuften Modus darin besteht, das Öffnen der Kappen (12) im funktionsfähigen Zustand jeweils über deren nominale Öffnung hinaus anzusteuern, wobei jede Klappe (12) im funktionsfähigen Zustand ein Öffnungsverhältnis R im Verhältnis zu deren Öffnung im normalen Modus ermöglicht, wobei das Öffnungsverhältnis R der folgenden Funktion entspricht:

$$R = (n+1)/n$$

wobei n für die Gesamtzahl der Klappen (12) der Düse (10) steht.

4. Verfahren zum Steuern nach einem der vorstehenden Ansprüche, **dadurch gekennzeichnet, dass** die Mittel zum Betätigen (14) der Klappen (12) der Düse (10) eine Vielzahl von Aktoren (16) umfassen, wobei jeder Aktor (16) einer Klappe (12) zugeordnet ist, um es zu ermöglichen die Verschiebung jeder Klappe (12) unabhängig voneinander anzusteuern.

5. Verfahren zum Steuern nach einem der vorstehenden Ansprüche, **dadurch gekennzeichnet, dass** die Mittel zum Erfassen Positionssensoren umfassen, die gestaltet sind, um die Winkelverschiebung einer jeden Klappe (12) zu messen.

6. Verfahren zum Steuern nach einem der vorstehenden Ansprüche, **dadurch gekennzeichnet, dass** die Mittel zum Erfassen Positionssensoren umfassen, die gestaltet sind, um die Verschiebung der Mittel zum Betätigen (14) einer jeden Klappe (12) zu messen.

7. Gondel eines Turbostrahltriebwerks zur Umsetzung des Verfahrens nach einem der vorstehenden Ansprüche, wobei die Gondel umfasst:

   - eine Düse (10) mit variabler Geometrie, einen stromabwärts befindlichen Querschnitt umfassend, der durch eine Vielzahl von Klappen (12) abgeschlossen wird, die beweglich montiert sind, um den Ausstoßquerschnitt der Düse (10) zu variieren,
   - Mittel zum Betätigen (14) der Klappen der Düse (10), die eine Vielzahl von Aktoren (16) umfassen, wobei jeder Aktor (16) einer Klappe (12) zugeordnet ist, um es zu ermöglichen die Verschiebung jeder Klappe (12) unabhängig voneinander anzusteuern,
   - ein Mittel zum Steuern (18), und
   - Mittel zum Erfassen des Zustands der Klappen (12) der Düse (10), die es ermöglichen, zumindest einen blockierten Zustand oder einen funktionsfähigen Zustand für jede Klappe (12) zu bestimmen.

**Claims**

1. A method for controlling a variable-geometry nozzle intended to equip a nacelle for a turbojet engine, a nacelle of the type including:

   - a variable-geometry nozzle (10) including a downstream section terminated by a plurality of flaps (12) which are movably mounted so as to vary the ejection section of the nozzle (10),
   - actuating means (14) of the flaps (12) of the nozzle (10),
   - control means (18) of the flaps (12) of the nozzle (10) in a desired position, and
   - detection means of the state of the flaps (12) of the nozzle (10) allowing determining at least one blocked state or an operating state for each flap (12),

   **characterized in that** the method is provided to control the nozzle (10) in a normal mode when the flaps (12) are detected in an operating state, or in a degraded mode when at least one flap (12) is detected in a blocked state by said detection means, a degraded mode in which the method consists in controlling the opening of one or several flap(s) (12) in the operating state beyond the nominal opening thereof, in order to compensate said at least one blocked flap (12) in order to ensure an opening of the nozzle (10) corresponding to the initial opening control.

2. The control method according to claim 1, **characterized in that**, in degraded mode, the method consists in controlling the opening of the flaps (12) in the operating state, depending on the number of flaps (12) in the blocked state and on the blocking position thereof.

3. The control method according to any one of the preceding claims, **characterized in that**, in degraded mode, the method consists in controlling the opening of the flaps (12) in the operating state each beyond the nominal opening thereof, each flap (12) in the operating state allowing an opening ratio R relative to their opening in normal mode, the opening ratio R corresponding to the following function:

$$R = (n+1)/n$$

   with n set for the total number of flaps (12) of the nozzle (10).

4. The control method according to any one of the preceding claims, **characterized in that** the actuating means (14) of the flaps (12) of the nozzle (10) include a plurality of actuators (16), each actuator (16) being associated to a flap (12) in order to allow independently controlling each flap (12) in displacement.

5. The control method according to any one of the preceding claims, **characterized in that** the detection means include position sensors designed to measure the angular displacement of each flap (12).

6. The control method according to any one of the preceding claims, **characterized in that** the detection means include position sensors designed to measure the displacement of the actuating means (14) of each flap (12).

7. A turbojet engine nacelle for implementing the method according to any one of the preceding claims, the nacelle including:

   - a variable-geometry nozzle (10) including a downstream section terminated by a plurality of flaps (12) which are movably mounted, so as to vary the ejection section of the nozzle (10),
   - actuating means (14) of the flaps of the nozzle (10) which include a plurality of actuators (16), each actuator (16) being associated to a flap (12) in order to allow independently controlling each flap (12) in displacement,
   - control means (18), and
   - detection means of the state of the flaps (12) of the nozzle (10) allowing determining at least one blocked state or an operating state for each flap (12).

Fig. 1

Fig. 2

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2622929

- EP 1040265 B1